# EUROPEAN PATENT APPLICATION

(11) **EP 1 622 380 A1**
(43) Date of publication of application: **01.02.2006**
(21) Application number: 04077198.2
(22) Date of filing: 30.07.2004
(51) Int. Cl.: H04N 7/173, A63F 13/12

(54) **Method and system for directing interactive TV shows**

(71) Applicant: Koninklijke KPN N.V., 9726 AE Groningen (NL)
(72) Inventor: Pijper, Carolina Adriana, 3511 HH Utrecht (NL)
(74) Representative: Wuyts, Koenraad Maria

(57) **Abstract**

The present invention discloses a method and a system of directing an interactive broadcast with participation of a plurality of viewers at home without having to synchronize the questions that are shown on TV and the questions that appear on the participant's device. This aim is reached by combining on-line and off-line techniques. The questions for the participants are sent on-line to the participant's device simultaneously with the appearance of the questions on TV during the broadcasting of the TV show.

## Description

### FIELD OF THE INVENTION

The present invention is related to an advanced TV broadcasting system, in particular to a system for facilitating viewer participation in a TV show using the Internet.

### BACKGROUND OF THE INVENTION

There is a need to involve TV subscribers more actively in TV programs. Using the Internet to provide viewers of TV programs with extra information is a logical step since the Internet is widely available. TV productions also want to have the people at home interact with the TV broadcast by using the Internet. WO 2004/021708A1 discloses a method and a system for facilitating viewer participation in a TV show using the Internet, whereby the TV show has been recorded before the actual broadcast of the show. According to this prior art, synchronization information is used to synchronize the show as it is broadcasted and the application available on a participant's device. Via this application questions are shown which can be answered by the participant. The synchronization information is sent to the participant's together with the questions before the TV show is broadcasted.

However, a disadvantage of a system according to the prior art is that the public is not able to participate in live TV shows. In the case of a live TV show it is, unlike a prerecorded TV show, not exactly known what the course of time is of the TV show at the time it is broadcasted. So, for the synchronization with a live TV show the method of the prior art, which is based on off-line techniques, is not accurate. Another problem of the prior art is that problems arise if a prerecorded show is broadcasted later than planned. For instance, the start of the broadcasting of a TV show can be delayed due to unexpected news events in the world. The synchronization information already received by the participants is then not accurate anymore. Also a problem of the prior art is that measures should be taken in order to prevent that participants take notice of the questions on forehand.

### AIM OF THE INVENTION

It is an object of the invention to eliminate the drawbacks of the prior art and to provide a system and a concept for producing an interactive TV show where a plurality of TV viewers simultaneously participate actively in a TV show, without having to synchronize the questions that are shown on TV and the questions that appear on the participant's device.

### SUMMARY OF THE INVENTION

In accordance with this invention a method of directing a broadcast show with participation of a plurality of viewers at home through the use of an interactive application on a participant's device during which show a question is shown on TV is disclosed, the method according to the present invention comprises:
downloading said interactive application and synchronization information before the actual broadcast;
presenting the question on-line via the participant's device using the interactive application;
registering participant input off-line;
submitting said participant input after the broadcast.

The present invention provides a method for directing a TV show with interaction of a plurality of viewers at home, avoiding synchronization problems. This aim is reached by combining on-line and off-line techniques.

The interactive application can be downloaded before the actual broadcast and is not downloaded by all participants at the same time. The questions for the participants are sent to the participant's device on-line. This means that a question that is shown on TV during the broadcasting of the TV show is presented simultaneously on the participant's device. The moment that a question appears on TV and the moment that this question is presented via the participant's device can be slightly different due to transmission and processing effects. However, from the point of view of the participant the question is presented via both media on more or less the same moment. Another aspect of the on-line presentation of questions via the participant's device is that the participant does not know a question until the question is shown on TV and via the participant's device.

The method can also have a step for collecting the individual answers from all participants and analyzing the answers off-line, i.e. after the TV show has been broadcasted. This can be at any point of time, and time-slot information comprised by the synchronization information can be used to avoid peakload problems after the end of the broadcast when all participants will send in their answers. The resulting scores can be delivered to both the individual participants and to the producers of the broadcast. Since the synchronization information does not form the biggest part of the interactive application this will still not lead to peakload problems, even when more participants are downloading this part at the same time.

An Internet site might be used for facilitating the downloading of the interactive application, which the participant can use with a device that is capable of interacting through the Internet, for example a personal computer or a mobile phone.

The invention also relates to a system that is used to carry out the method for directing an interactive broadcast without having to use synchronization information for the questions to be presented via the participants' devices.

### BRIEF DESCRIPTION OF THE DRAWING FIGURE

The foregoing aspects and many of attendant advantages of this invention will become better understood by reference to the following detailed description, when taken in conjunction with the accompanying drawing, wherein:
FIG. **1** shows a block diagram illustrating an exemplary embodiment of the invention.
FIG. **2** shows a flowchart according to an exemplary embodiment of the invention.

### EXEMPLARY EMBODIMENTS

For the purpose of teaching of the invention, preferred embodiments of the method and devices of the invention are described in the sequel. It will be apparent to the person skilled in the art that other alternative and equivalent embodiments of the invention can be conceived and reduced to practice without departing form the true spirit of the invention, the scope of the invention being limited only by the appended claims as finally granted.

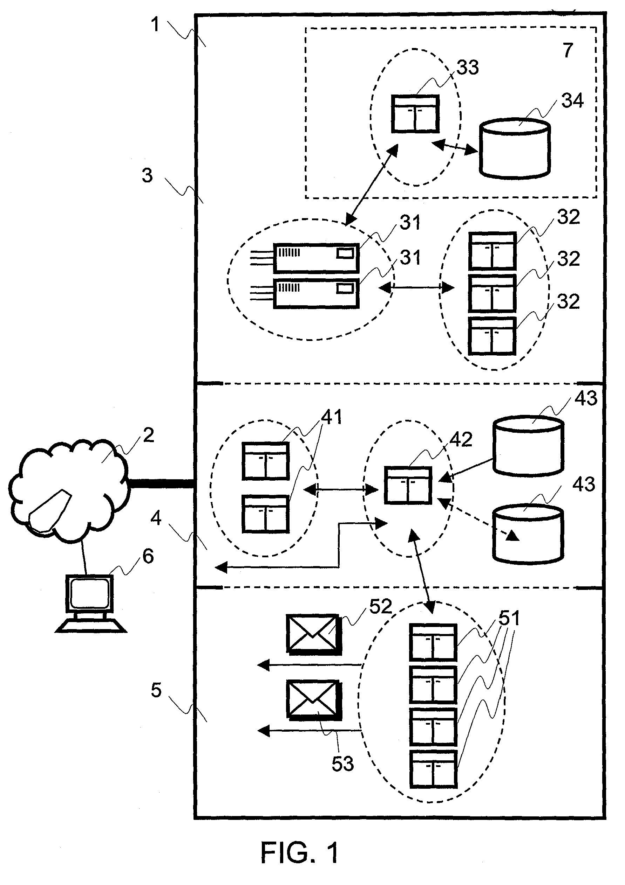

Fig 1 shows a system (1) for directing the interactive part of a broadcast show. The system is connected to the participants at home (6) via a communications network (2), e.g. the Internet. The system comprises three subsystems, the application download system (3), the registration system (4) and the score delivery system (5). The application download system (3) comprises one or more proxy servers (31) to communicate with the participants, one or more webservers (32) for providing information about the broadcast show and facilitating downloading of the application, and an on-line section (7) for sending the questions to the participants devices. The registration system (4) comprises one or more proxy servers (41) to communicate with the participants, and one or more CGI servers (42) to execute the registration process of participant details and results and providing the results from the database (43) to the score delivery system (5), and one or more databases (43) for storing participant details and results. The score delivery system (5) comprises one or more mail servers (51) for sending the participant scores by email to the participants (52) and to the broadcast studio (53). The participants at home (6) use a device capable of communicating through the Internet, e.g. a personal computer or a mobile phone.

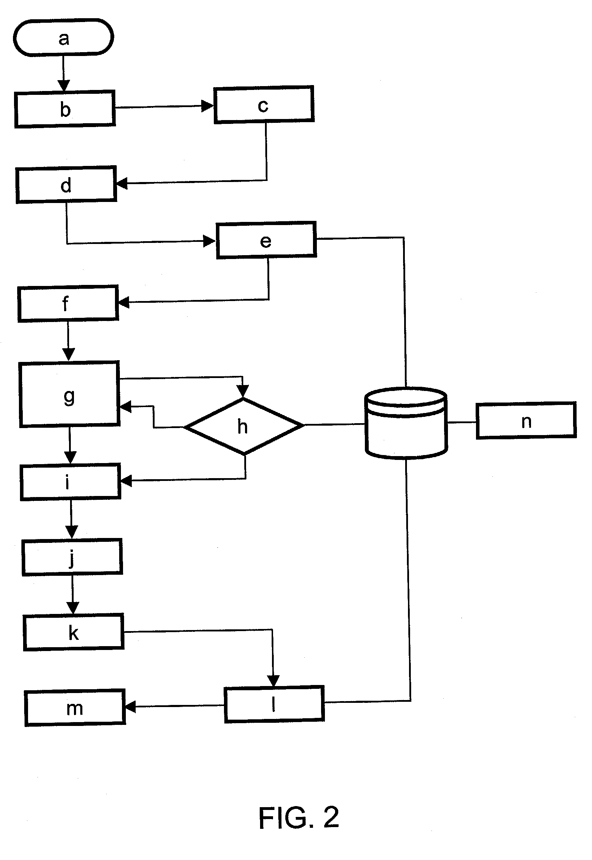

The invention will be further explained with reference to the flowchart of Fig. 2. The invention relates to broadcast shows that are broadcasted live. Some time before the actual broadcast of the show, the potential audience is informed about the intended broadcast of the show with special commercial messages. In these messages the audience is also informed of the fact that the TV viewers at home can participate in the show, and they are referred to the relevant Internet site of the show on the system (1).
On the Internet site the participant receives further information about the show and the interactive part of it, step a. If the participant decides that he would like to participate during the broadcast of the show he requests a registration form in step b. An HTML or flash registration page is sent to the participant (step c) and in step d the participant enters his personal information, including but not limited to his email address in registration system (4). On reception of the participant information a participant entry is made in the database (43) and a password is sent to the participant, step e. The advantage of registering all potential participants in registration system (4) is that the necessary capacity for equipment can be taken care of in advance, and in the event too many participants try to register, the production company can decide to close registration, or in the event only a limited number of people register themselves as participants the commercial messages with regard to the show can be repeated once more. The participant can now decide to download the Internet application installation package from the download application system (3), and run the installation, step f. This installation package includes the heavy part of the application. By providing the possibility to download this part of the software during a certain time period T1 (e.g. one week) before the actual broadcast the potential participants will not download the software simultaneously, avoiding a peak load problem shortly before the start of the show.

The possibility to download the Internet application is closed a predetermined time period T2 before the start of the show. Registered participants are asked to log on into the Internet application of the game show during the predetermined time period T2 before the show is scheduled to start, step g. After validation of participant name and password, in step i, the participant receives in step h the participant code and the URL link to now download the last part of the application from application download system (3), containing the synchronization information and a time slot for submitting the answers after the show. The synchronization information can be used together with the time slots for submitting the answers at a later moment. For instance, the synchronization information identifies the end of the show and the time slots define the time relative to the end of the show. It may also be the case that no synchronization information is needed and the usage of time slots is sufficient. According to the present invention the synchronization information, if used, does not relate to timing issues regarding the questions because the questions are presented via the participant's device on-line. As a consequence, the synchronization information that is sent before the broadcast of the show can be relatively simple.

After the participant has downloaded the synchronization information and a time slot, he can stay on-line on the Internet. The status of the show, i.e. broadcast started or not started, can be shown to the participant via the application. After the broadcast of the show has started, there can be submitted questions to the device of the participant, step j. These questions are submitted on-line, i.e. a question appears on the screen of the participant's device simultaneously with the appearance of that question on TV. For this purpose the download system (3) comprises an on-line section (7) for sending the questions to the participants devices. The on-line section comprises a database (34), a control unit (not shown in the figure) and possible a CGI server (33). The database (34) contains the questions to be sent to the participants' devices and the control unit takes care for the coordination between the sending of the questions and the course of the show. For instance, the control unit could receive a signal from a system used for the broadcasting of the show each time a question is to be shown on TV. This will trigger the on-line section (7) to send the question to the participants' devices. For sending the questions to the participants' devices broadcasting techniques can be used.

The participant can view the show, participate and fill in his answers to the questions, at the same time as the contestants in the show on TV. In an embodiment the amount of time, e.g. 5 seconds, available to the participant to answer a question equals the amount of time that is available to the contestants in the show to answer a question. This type of timing issues can be easily dealt with by the interactive application that is downloaded by the participant. The interactive application may also be provided with functionality for restraining participants from correcting their answers.

The answers to the questions can be recorded locally on the participant's device. Although the questions are shown to the participant on-line, the answers to these questions are sent off-line to the score delivery system (5). The participant can submit his answers after the final question, step k. To avoid peak load at the end of the show, when all participants might sent in their results at exactly the same time, the local interactive application received a time slot during download. The consequence of this is that the exact moment of submitting the results is directed in the software to avoid peak load and possible subsequent crashing of the system.

The next step (I) is registration system (4) saving the results of the participants at home in the database (43). A next step is the score delivery system (5) calculates the personal results of the participants and sends a "thank you" message with the results to the participants, step m. In the next step (n) the results and scores of all participants are processed by score delivery system (5) in the format requested by the producer of the show, so that the results of the home participants can be compared with the results of the contestants in the studio.

## Claims

1. A method of directing a broadcast show with participation of a plurality of viewers at home through the use of an interactive application on a participant's device during which show a question is shown on TV, comprising the steps of:
downloading said interactive application and synchronization information before the actual broadcast;
presenting the question on-line via the participant's device using the interactive application;
registering participant input off-line;
submitting said participant input after the broadcast.

2. A method according to claim 1 also comprising the steps of:
collecting and analyzing all participant input and
delivering the results of said analyzing to all participants.

3. A method according to claim 1 or 2 in which said interactive application and said synchronization information are downloaded separately.

4. A method according to any of claims 1 to 3 in which said synchronization information comprises a time slot for said submitting of the participant input.

5. A method according to any of claims 1 to 4 in which said interactive application and said synchronization information are downloaded from the Internet site of said broadcast.

6. A method according to any of claims 1 to 5 in which said participant device is capable of communicating through the Internet.

7. A system (1) for directing a broadcast with participation of a plurality of participants at home through the use of an interactive application on a participant's device, comprising:
a downloading application system (3) for providing said interactive application and synchronization information to said participants before the actual broadcast, which downloading application system (3) comprises an on-line section (7) for sending a question to the participant's device;
a registration system (4) for registering participant input after said broadcast.

8. A system according to claim 7 also comprising a score delivery system (5) for analyzing participant input and delivering the results of said analyzing to all participants.

9. A system according to claim 7 or 8 in which said participants are connected to said system through the Internet.
